**Europäisches Patentamt**

**European Patent Office**

**Office européen des brevets**

(19)

(11) Veröffentlichungsnummer: **0 237 766**
**B1**

(12) # EUROPÄISCHE PATENTSCHRIFT

(45) Veröffentlichungstag der Patentschrift:
**27.06.90**

(51) Int. Cl.⁵: **A01C 7/04**

(21) Anmeldenummer: **87101798.4**

(22) Anmeldetag: **10.02.87**

(54) **Pneumatische Einzelkornsämaschine.**

(30) Priorität: **14.02.86  DE 3604628**

(43) Veröffentlichungstag der Anmeldung:
**23.09.87 Patentblatt 87/39**

(45) Bekanntmachung des Hinweises auf die Patenterteilung:
**27.06.90 Patentblatt 90/26**

(84) Benannte Vertragsstaaten:
**DE FR NL**

(56) Entgegenhaltungen:
**DE-A- 3 405 030**
**DE-B- 2 242 272**
**DE-C- 1 931 362**
**DE-C- 3 405 031**
**GB-A- 2 000 422**

(73) Patentinhaber: **Amazonen-Werke H. Dreyer GmbH & Co. KG, Am Amazonenwerk 9-13,**
**D-4507 Hasbergen-Gaste(DE)**

(72) Erfinder: **Kemper, Martin, Fontanestrasse 15,**
**D-4506 Natrup-Hagen(DE)**

ACTORUM AG

## Beschreibung

Die Erfindung betrifft eine pneumatische Einzelkornsämaschine gemäß dem Oberbegriff des Anspruches 1.

Eine derartige Einzelkornsämaschine ist bereits durch die GB-A 2 000 422 bekannt. Bei dieser bekannten Einzelkornsämaschine ist an dem Gehäuse des Säaggregates ein an das Vereinzelungsorgan heranreichendes Abstreifelement angeordnet. Die wirksame Kante dieses Abstreifers nähert sich den mit Saugluft beaufschlagten Löchern in Drehrichtung des Vereinzelungsorgans gesehen allmählich. Nachteilig ist bei diesem bekannten Abstreifelement, daß es auf die jeweilige Art des auszubringenden Saatgutes genau eingestellt werden muß. Die Einstellung des um eine schwenkbare Achse gelagerten Abstreifelementes erfolgt über eine Einstellschraube. Das Einstellen des Abstreifelementes erfordert mehrere Probeläufe zur Kontrolle der genauen Einstellung des Abstreifelementes und ist sehr umständlich und zeitaufwendig. Das Abstreifelement wird von der Einstellschraube und einem elastischen Element (Feder) in seiner Abstreifposition gehalten.

Weiterhin ist durch die DE-B 2 242 272 ebenfalls eine Einzelkornsämaschine mit einem im oberen Bereich radial außerhalb gegen die Außenseite des Vereinzelungsorgans anliegenden Abstreifers bekannt. Der Abstreifer ist stufenförmig profiliert, wobei die wirksamen Oberflächen der Stufen mit zunehmendem Abstand von der Außenseite des Vereinzelungsorgans weiter von deren Lochkreis zurücktreten. Dieser Abstreifer muß ebenfalls auf die jeweilige Art des auszubringenden Saatgutes, mit Hilfe einer Rändelschraube, eingestellt werden, wodurch zur Kontrolle der genauen Einstellung des Abstreifelementes mehrere Probeläufe erforderlich sind.

Des weiteren ist durch die DE-A 3 405 030 eine Einzelkornsämaschine mit einem Abstreifelement bekannt, das durch seine konstruktiv vorgegebene Einstellung universell für alle Saatgutsorten geeignet ist. Zur Vereinzelung der unterschiedlichen Saatgutsorten wird nur das Vereinzelungsorgan ausgewechselt, wenn sich der mittlere Durchmesser der Saatkörner der auszubringenden Saatgutsorte sehr stark ändert. Als nachteilig hat sich hier jedoch die starre Anordnung des Abstreifelementes erwiesen, da es durch das Zusammenwirken der auf dem Vereinzelungsorgan angeordneten Vorsprünge mit dem Abstreifelement unter unglücklichen Umständen zum Einklemmen von Saatkörnern zwischen diese beiden Bauteile kommen kann. Dieses Ein- oder Verklemmen von Saatkörnern kann sowohl zu Beschädigungen an den Saatkörnern selbst als auch an den Bauteilen der Säaggregate führen.

Der Erfindung liegt daher die Aufgabe zugrunde, für pneumatische Einzelkornsämaschinen der eingangs umrissenen Gattung ein einfach zu handhabendes Abstreifelement zu schaffen und Beschädigungen zu vermeiden.

Diese Aufgabe wird erfindungsgemäß durch den kennzeichnenden Teil des Anspruches 1 gelöst. Infolge dieser Maßnahme wird den Benutzern von Einzelkornsämaschinen in überraschender Weise ein einfach zu handhabendes Abstreifelement an die Hand gegeben. Ein Einstellen des Abstreifers auf die jeweilige Art des auszubringenden Saatgutes entfällt. Dadurch, daß das an Teilen der Vereinzelungsscheibe zur Anlage kommende Abstreifelement mittels eines elastischen Elementes in seiner Abstreifposition erhalten wird, werden das Saatgut und die Bauteile des Säaggregates in besonders vorteilhafter Weise vor Beschädigungen geschützt. Die erfindungsgemäße Anordnung des Abstreifelementes bringt aber nicht nur Vorteile für den Benutzer von Einzelkornsämaschinen, sondern auch für die Herstellung solcher Einzelkornsämaschinen. Denn durch die Maßnahme, daß die gekrümmte Auslauffläche des Abstreifelementes an Teilen der Vereinzelungsscheibe zur Anlage kommt, sind nur die Fertigungstoleranzen des Abstreifers einzuhalten, da er mit der Vereinzelungsscheibe zusammenwirkt. Der Abstreifer wird von direkt der Vereinzelungsscheibe geführt und zentriert sich somit selbsttätig an dieser Scheibe. Das genaue und umfangreiche Einjustieren des Abstreifers entfällt.

In einer Ausführungsform ist vorgesehen, daß die Anlagefläche derart gekrümmt ist, daß die Krümmung zumindest annähernd den mit dem Radius, der dem Abstand der Drehachse zu den Teilen entspricht, um die Drehachse geschlagenen Kreisabschnitt entspricht. Hierdurch wird die Anlagefläche des Abstreifers in besonders vorteilhafter Weise ausgebildet, so daß sich der Abstreifer genau an das Vereinzelungsorgan anliegen kann.

In einer Ausführungsform ist erfindungsgemäß vorgesehen, daß die Anlagefläche des Abstreifelementes an dem umlaufenden Außenrand der Scheibe anliegt. Infolge dieser Maßnahme läßt sich auf einfachste Weise eine Anlagefläche für das Abstreifelement schaffen, gegen die das Abstreifelement mit Hilfe eines elastischen Elementes gezogen wird. Hierdurch befindet sich das Abstreifelement immer in einer genau definierten Stellung in bezug auf die Vereinzelungsscheibe, und durch das Zusammenwirken von Vereinzelungsscheibe und Abstreifelement wird für eine präzise Vereinzelung der Saatkörner gesorgt. Die Genauigkeit der Vereinzelung der Saatkörner kann also nicht durch eine fehlerhafte Einstellung zwischen Abstreifer und Vereinzelungsscheibe beeinflußt werden

In einer besonders vorteilhaften Ausführungsform ist erfindungsgemäß vorgesehen, daß die Anlagefläche des Abstreifelementes an den äußeren auf einem Kreisbogen liegenden Anlageflächen der aus der Vereinzelungsscheibenebene herausragenden und von den Löchern auf der Vereinzelungsseite gebildeten Erhöhungen anliegt. Hierbei können die Erhöhungen als kreisförmige Ringflächen ausgebildet sein. Die gekrümmte Anlagefläche des Abstreifers ist derart ausgebildet, daß sie zumindest eine Länge aufweist, die dem Abstand zwischen zwei benachbarten Löchern entspricht. Hierdurch wird erreicht, daß das Abstreifelement direkt von den Sauglöchern der Vereinzelungsscheibe geführt wird, wodurch sich eine besonders genaue Zentrierung des Abstreifers ergibt, da der Abstreifer hierbei direkt mit den Sauglöchern, an denen die Saatkörner anhaften, zusammenwirkt.

Die erfindungsgemäße Gestaltung des Abstreifelementes sieht vor, daß das Abstreifelement eine Abstreiffläche aufweist, die die Anlagefläche in Richtung der Drehachse des Vereinzelungsorgans überragt. Hierbei kann die Abstreiffläche des Abstreifelementes auf der Drehachse des Vereinzelungsorgans zugewandten Seite stufenförmig ausgebildet sein und eine Aufeinanderfolge von Ausnehmungen und von winkelförmigen Vorsprüngen aufweisen. Diese Ausbildung der Abstreiferfläche bewirkt, daß die Saatkörner von den verschiedenen Stufen des Abstreifers untergriffen werden, wodurch die überzähligen, von den Sauglöchern aufgenommenen Körner von dem Vereinzelungselement abgeworfen werden.

Weiterhin sieht die Erfindung vor, daß verschiedene Vereinzelungsorgane vorgesehen sind, wobei diese Vereinzelungsorgane jeweils auf die entsprechende Gutsorte abgestimmte Anlageflächen für das Abstreifelement aufweisen. Infolge dieser Maßnahme werden die ohnehin für die verschiedenen Saatgutarten erforderlichen Vereinzelungsorgane derart ausgebildet und auf die Wirkungsweise des erfindungsgemäßen Abstreifers abgestimmt, so daß ein Einstellen des Abstreifers auf die jeweilig auszubringende Saatgutart entfällt, da der Abstreifer durch die jeweilige Vereinzelungsscheibe zentriert wird. Durch die erfindungsgemäße Gestaltung des Abstreifers und die Art und Weise des Zusammenwirkens mit der Vereinzelungsscheibe wird auf überraschend einfache Weise ein selbsteinstellender Abstreifer geschaffen, der dem Benutzer von Einzelkornsämaschinen das genaue Einstellen des Abstreifers auf die jeweils auszubringende Saatgutart erspart. Somit werden den Benutzern von pneumatischen Einzelkornsämaschinen einfach zu handhabende Säaggregate an die Hand gegeben, die eine präzise Vereinzelung der Saatkörner gewährleisten und sowohl Saatgut als auch Bauteile des Säaggregates in vorteilhafter Weise vor Beschädigungen schützt.

Weitere Einzelheiten der Erfindung sind der Beispielsbeschreibung sowie den Zeichnungen zu entnehmen. Hierbei zeigen

Fig. 1 das Gehäuse des Säaggregates ohne Deckel mit Vereinzelungsorgan und an dem Vereinzelungsorgan anliegendem Abstreifelement in der Seitenansicht,

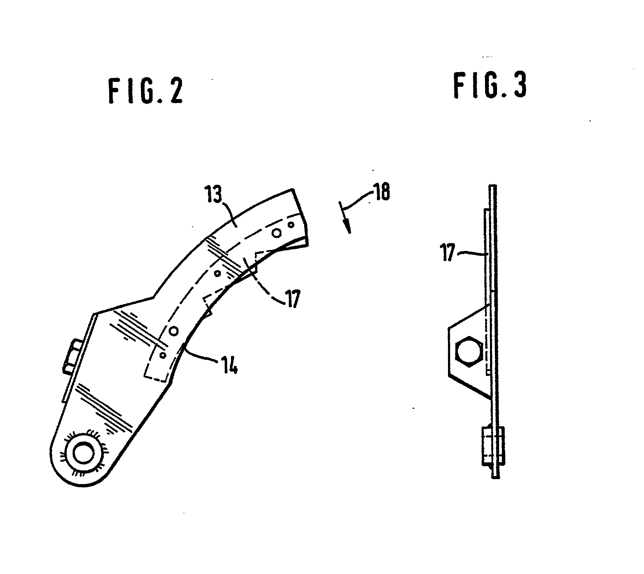

Fig. 2 das erfindungsgemäße Abstreifelement in der Seitenansicht und

Fig. 3 das Abstreifelement gemäß Fig. 2 in der Draufsicht.

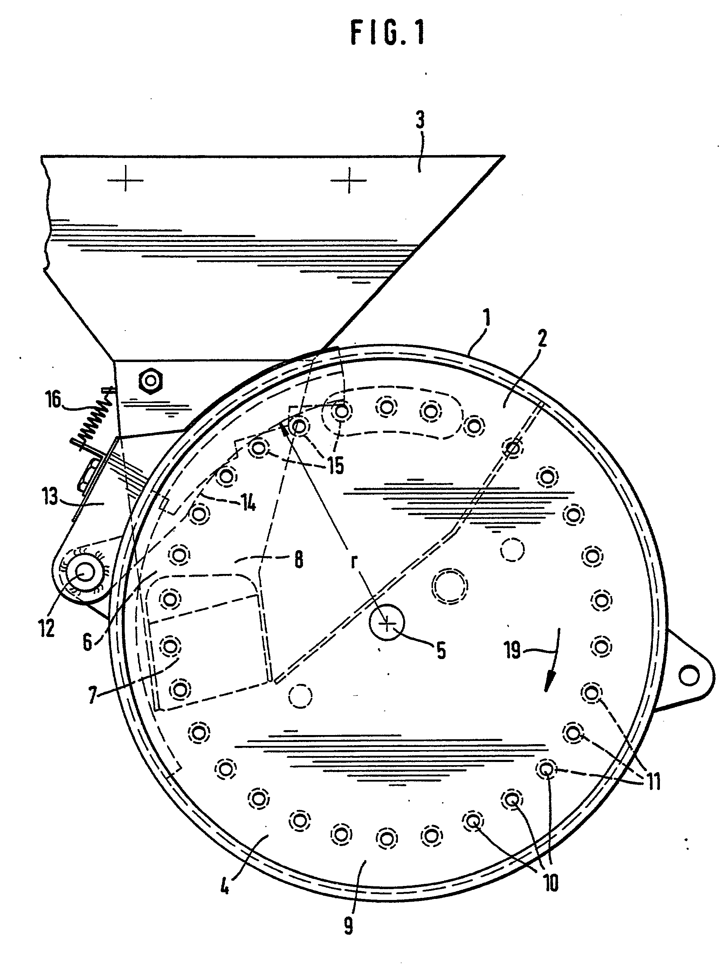

Die Fig. 1 zeigt das Gehäuse 1 eines Säaggregates ohne Deckel einer bekannten pneumatischen Einzelkornsämaschine. Diese Säaggregate sind nebeneinander in einem Abstand nebeneinander am Rahmen von Einzelkornsämaschinen angeordnet und dienen zum Vereinzeln des auszubringenden Saatgutes. Das Gehäuse 1 weist den Vereinzelungsmechanismus 2 und den am Gehäuse 1 angeflanschten Saatgutbehälter 3 auf. Dieses Gehäuse 1 ist in bekannter und nicht dargestellter Weise mit der Saugseite eines von der Schlepperzapfwelle angetrieben Gebläses verbunden.

In dem Gehäuse 1 ist das umlaufende, scheibenförmige Vereinzelungsorgan 4 auf der Antriebswelle 5 angeordnet und wird in bekannter Weise angetrieben. Das Gehäuse 1 besteht aus dem rückwärtigen Teil 6, an dem der Saatgutbehälter 3 angeflanscht ist und dem nicht dargestellten Deckel. Das rückwärtige Teil 6 weist die Öffnung 7 zu dem angeflanschten Saatgutbehälter 3 auf, so daß der sich im rückwärtigen Teil 6 des Gehäuses 1 befindliche Saatgutvorratsraum 8 mit dem Saatgutbehälter 3 eine Einheit bildet. In dem nicht dargestellten Deckel ist die Saugkammer angeordnet, die mit einem Gebläse verbunden ist.

Das Vereinzelungsorgan 4 ist als Scheibe 9 ausgebildet und trennt den Saatgutbehälter 3 von der Saugkammer. Die Scheibe 9 weist die konzentrisch zu der von der Antriebswelle 5 gebildeten Vereinzelungsorganachse im gleichen Umfangsabstand zueinander angeordneten Löcher 10 auf. Die Saugkammer erstreckt sich längs eines Teiles der Bahn der Löcher 10, so daß an einem Punkt der Bahn der an die Löcher 10 im Bereich der Saugkammer anliegende Unterdruck unterbrochen wird.

Die Löcher 10 sind auf der Saatgutbehälterseite, also auf der Vereinzelungsseite der Scheibe 9, von aus der Scheibenebene herausragenden Erhöhungen 11 umgeben. Oberhalb der Vereinzelungsorganachse, die von der Antriebswelle 5 gebildet wird, ist auf der Saatgutbehälterseite der Scheibe 9 an dem rückwärtigen Teil 6 des Gehäuses 1 das um die Schwenkachse 12 drehbar gelagerte Abstreifelement 13 angeordnet. Dieses Abstreifelement 13 liegt mit seiner gekrümmten Anlagefläche 14 an der radialen Außenfläche 15 der Erhöhungen 11 der Scheibe 9 an. Mit Hilfe der Feder 16 wird das Abstreifelement 13 gegen die radialen Außenflächen 15 der Erhöhungen 11 gezogen, wodurch sich der Abstreifer 13 von selbst zentriert. Die Anlagefläche 14 des Abstreifers 13 ist derart gekrümmt, daß die Krümmung den mit dem Radius, der mit dem Abstand r der Drehachse 5 zu den Teilen 15 entspricht, um die Drehachse 5 geschlagenen Kreisbogenabschnitt entspricht. Die grkrümmte Anlagefläche 14 des Abstreifelementes 13 weist eine Länge auf, die sich über den Abstand von 5 Löchern 10 erstreckt. Weiterhin weist das Abstreifelement 13 eine Abstreiferfläche 17 auf, die in radialer Richtung 18 die Anlagefläche 14 nach innen überragt und stufenförmig ausgebildet ist.

Die Funktionsweise der vorbeschriebenen Einzelkornsämaschine läßt sich wie folgt erläutern:

Das in dem Saatgutbehälter 3 befindliche Saatgut gelangt durch die Öffnung 7 in den Saatgutvorratsraum 8. Hier liegt das Saatgut an der Vereinzelungsscheibe 9 an. Die Vereinzelungsscheibe 9 wird von der Antriebswelle 5 in bekannter Weise angetrieben, so daß sich die Scheibe 9 während des Ausbringens des Saatgutes dreht. Während des Ausbringens und des Vereinzelns des Saatgutes werden die Löcher 10 im Bereich der Saugkammer mit Saugluft beaufschlagt. Während sich die Löcher 10 mit den aus der Scheibenebene herausragenden Erhöhungen 11 aufgrund der Drehung der Scheibe 9 in Drehrichtung 19 durch den Saatgutvorrat bewegen, setzten sich ein oder mehrere Saatkörner an den mit Saugluft beaufschlagten Löchern 10 fest. Jetzt gelagen die Löcher 10 mit den angesaugten Saatkörnern in den Bereich des Abstreifelementes 13. Die verschiedenen Stufen des Abstreifers 13, die eine Aufeinandervolge von ausnehmungen und winkelförmigen Vorsprüngen aufweisen, bewirken, daß die Saatkörner in den verschiedenen Stufen des Abstreifers 13 untergriffen werden, wodurch die überzähligen, von den Sauglöchern 10 aufgenommenen Saatkörner von der Vereinzelungsscheibe abgeworfen werden, so daß nur noch ein Saatkorn an jedem Saugloch 10 anhaftet. Diese vereinzelten Saatkörner werden entlang der Bahn der Sauglöcher 10 solange mitgeführt, bis sie nach Unterbrechen der Saugwirkung von den Löchern 10 aufgrund der Schwerkraft in bekannter Weise in die Säfurche fallen.

Das Abstreifelement 13 ist derart ausgebildet, daß es immer an der Vereinzelungsscheibe 9 zum Anliegen kommt, so daß es sich von selbst zentriert. Ein mühsames und zeitaufwendiges Einstellen des Abstreifers 13 entfällt. Beim Ausbringen von anderen Saatgutsorten wird die Vereinzelungsscheibe 9 in bekannter Weise ausgewechselt. Die als Vereinzelungsscheiben 9 ausgebildeten Vereinzelungsorgane 4 sind derart ausgebildet, daß sie jeweils auf die entsprechende Saatgutsorte abgestimmte Anlageflächen 14 für das Abstreiferelement aufweisen, so daß sich der Abstreifer 13 selbständig zentriert. Durch die erfindungsgemäße Gestaltung des Abstreifelementes 13 sowie das Zusammenwirken des Vereinzelungsorgans 14 mit dem Abstreifer 13 wird dem Landwirt ein einfach zu handhabendes Einzelkornsäaggregat an die Hand gegeben.

**Patentansprüche**

1. Pneumatische Einzelkornsämaschine mit einem Saatgutbehälter und einer Saugkammer, die voneinander durch ein als Vereinzelungsscheibe (9) ausgebildetes umlaufendes scheibenförmiges Vereinzelungsorgan (4) getrennt sind, welches auf der der Saugkammer abgewandten Seite im unteren Bereich durch den im Saatgutbehälter (3) vorhandenen Saatgutvorrat führbar ist und konzentrisch zu der Vereinzelungsorganachse (5) im gleichen Umfangsabstand voneinander angeordnete Löcher (10) aufweist, wobei die Saugkammer sich längs eines Teils der Bahn der Löcher (10) erstreckt und an einem Punkt der Bahn der Unterdruck unterbrochen ist, wobei oberhalb der Vereinzelungsorganachse (5) auf der Saatgutbehälterseite im Bereich der Saugkammer an dem Gehäuse der Einzelkornsämaschine ein an das Vereinzelungsorgan (4) heranreichendes Abstreifelement (13) angeordnet ist, welches mittels eines elastischen Elementes (16) in seiner Abstreifposition haltbar ist, dadurch gekennzeichnet, daß das Abstreifelement (13) auf seiner der Vereinzelungsscheibe (9) und der Drehachse (5) der Vereinzelungsscheibe (9) zugewandten Seite eine gekrümmte Anlagefläche (14) aufweist, daß die Vereinzelungsscheibe (9) eine auf einem Kreisbogen befindliche Anlagefläche (15) aufweist, und daß die gekrümmte Anlagefläche (14) des Abstreifelementes (13) durch das elastische Element (16) gegen die auf einem Kreisbogen befindliche Anlagefläche (15) von Teilen der Vereinzelungsscheibe (9) ziehbar ist.

2. Einzelkornsämaschine nach Anspruch 1, dadurch gekennzeichnet, daß die gekrümmte Anlagefläche (14) des Abstreifelementes (13) derart gekrümmt ist, daß die Krümmung zumindest annähernd den mit dem Radius, der dem Abstand (r) der Drehachse (5) zu den die Anlagefläche (15) der Vereinzelungsscheibe (9) aufweisenden Teilen (10, 11) entspricht, um die Drehachse (5) geschlagenen Kreisbogenabschnitt entspricht.

3. Einzelkornsämaschine nach Anspruch 1, dadurch gekennzeichnet, daß die gekrümmte Anlagefläche (14) des Abstreifelementes (13) an dem umlaufenden Außenrand der Scheibe (9) anliegt.

4. Einzelkornsämaschine nach Anspruch 1, dadurch gekennzeichnet, daß die Löcher (10) auf der Vereinzelungsseite von aus der senkrecht zur Drehachse sich befindlichen Scheibenebene herausragenden Erhöhungen (11) umgeben sind, wobei die gekrümmte Anlagefläche (14) des Abstreifelementes (13) an den äußeren auf einem Kreisbogen liegenden Anlageflächen (15) der Erhöhungen (11) anliegt.

5. Einzelkornsämaschine nach Anspruch 4, dadurch gekennzeichnet, daß die Erhöhungen (11) als kreisförmige Ringflächen ausgebildet sind, wobei die gekrümmte Anlagefläche (14) des Abstreifelementes (13) zumindest eine Länge aufweist, die dem Abstand zwischen zwei benachbarten Löchern (10) entspricht.

6. Einzelkornsämaschine nach Anspruch 1, dadurch gekennzeichnet, daß das Abstreifelement (13) eine Abstreiffläche (17) aufweist, die die Anlagefläche (14) in Richtung der Drehachse des Vereinzelungsorgans überragt.

7. Einzelkornsämaschine nach Anspruch 6, dadurch gekennzeichnet, daß das Abstreifelement (13) eine Abstreiffläche (17) aufweist, die auf der Drehachse des Vereinzelungsorgans zugewandten Seite stufenförmig ausgebildet ist.

8. Einzelkornsämaschine nach Anspruch 1, dadurch gekennzeichnet, daß verschiedene Vereinzelungsorgane (4) vorgesehen sind, und diese Vereinzelungsorgane (4) jeweils auf die entsprechende Gutsorte abgestimmte Anlageflächen für das Abstreifelement (13) aufweisen.

**Claims**

1. Pneumatic seed drill for sowing single seeds, including a seed hopper and a suction chamber which are separated from each other by a circumferential, discshaped singling-out means (4), which is in the form of a singling-out disc (9) and is conductable through the seed store in the lower region of the seed hopper (3) on the side remote from the suction chamber, and said means is provided with apertures (10), which are disposed at the same circumferential spacing from one another concentrically relative to the axle (5) of the singling-out means, the suction chamber extending longitudinally of a portion of the path of apertures (10), and the reduced pressure is interrupted at a point along the path, wherein a scraper element (13), which extends as far as the singling-out means (4), is disposed on the housing of the seed drill for sowing single seeds above the axle (5) of the singling-out means at the seed hopper end in the region of the suction chamber and is retainable in its scraping position by means of a resilient element (16), characterised in that the scraper element (13) has a curved contact surface (14) on its side facing the singling-out disc (9) and the rotary axle (5) of the singling-out disc (9), in that the singling-out disc (9) has an abutment surface (15) forming an arc of a circle, and in that the curved contact surface (14) of the scraper element (13) can be drawn by the resilient element (16) towards the abutment surfaces (15), situated on an arc of a circle, of portions of the singling-out disc (9).

2. Seed drill for sowing single seeds according to claim 1, characterised in that the curved contact surface (14) of the scraper element (13) is curved in such a manner that the curvature corresponds at least approximately to the arcuate portion, which extends around the rotary axle (5), together with the radius which corresponds to the spacing (r) between the rotary axle (5) and the component parts (10, 11), which include the abutment surface (15) of the singling-out disc (9).

3. Seed drill for sowing single seeds according to claim 1, characterised in that the curved contact surface (14) of the scraper element (13) abuts against the circumferential outer edge of the disc (9).

4. Seed drill for sowing single seeds according to claim 1, characterised in that apertures (10) on the singling-out side are surrounded by raised portions (11), which extend from the disc plane situated vertically relative to the rotary axle, wherein the curved contact surface (14) of the scraper element (13) abuts against the outer abutment surfaces (15) of the raised portions (11) situated on an arc of a circle.

5. Seed drill for sowing single seeds according to claim 4, characterised in that the raised portions (11) are in the form of circular annular surfaces, wherein the curved contact (14) of the scraper element has at least a length which corresponds to the spacing between two adjacent apertures (10).

6. Seed drill for sowing single seeds according to claim 1, characterised in that the scraper element (13) has a scraper surface (17) which protrudes beyond the contact surface (14) in the direction of the rotary axle of the singling-out means.

7. Seed drill for sowing single seeds according to claim 6, characterised in that the scraper element (13) has a scraper surface (17) which has a stepped configuration on the side facing the rotary axle of the singling-out means.

8. Seed drill for sowing single seeds according to claim 1, characterised in that various singling-out means (4) are provided, and these singling-out means (4) each have abutment surfaces for the scraper element (13), which surfaces are adapted to the particular type of material involved.

## Revendications

1. Semoir pneumatique de précision, comportant une trémie à semence et une chambre d'aspiration, séparées l'une de l'autre par un organe séparateur (4), en forme de disque rotatif constitué par un disque séparateur (9), cet organe, passant dans la réserve de semence existant du côté opposé à la chambre d'aspiration, dans la zone inférieure de la trémie à semence (3), comporte des trous (10) répartis de manière équidistante, sur un cercle concentrique à l'axe de l'organe séparateur (5), la chambre d'aspiration s'étendant le long d'une partie de la trajectoire des trous (10) et la dépression est interrompue en un point de la trajectoire, et au-dessus de l'axe des organes séparateurs (5), sur le côté de la trémie à semence, au niveau de la chambre d'aspiration, il est prévu un racleur (13) monté sur le boîtier du semoir de précision et arrivant jusqu'au niveau de l'organe séparateur (4), élément racleur qui est maintenu dans sa position de raclage par un élément élastique (16), semoir caractérisé en ce que le racleur (13) présente une surface d'appui courbe (14) sur sa face tournée vers le disque séparateur (9) et l'axe de rotation (5) du disque séparateur (9), le disque séparateur (9) ayant une surface d'appui (15) sur un arc de cercle et la surface d'appui (14), courbe, du racleur (13) est tirée par l'élément élastique (16) contre les surfaces d'appui (15) de parties du disque séparateur (9), surfaces d'appui sont se trouvent sur un arc de cercle.

2. Semoir de précision selon la revendication 1, caractérisé en ce que la surface d'appui courbe (14) du racleur (13) est courbée pour que la courbure corresponde au moins approximativement au rayon des parties (10, 11) prévues sur la surface d'appui (15) du disque séparateur (9), à la distance (r) de l'axe de rotation (5), et située sur un arc de cercle centré sur axe de rotation (5).

3. Semoir de précision selon la revendication 1, caractérisé en ce que la surface d'appui (14), courbe, du racleur (13) s'appuie contre le bord extérieur périphérique du disque (9).

4. Semoir de précision selon la revendication 1, caractérisé en ce que les trous (10) comportent sur le côté de séparation, des bossages (11) en saillie par rapport au plan du disque perpendiculaire à l'axe de rotation, la surface d'appui courbe (14) du racleur (13) s'appuyant contre les surfaces d'appui (15) extérieures des bossages (11) situées sur l'arc de cercle.

5. Semoir de précision selon la revendication 4, caractérisé en ce que les bossages (11) sont réalisés sous la forme de surfaces annulaires circulaires, la surface d'appui courbe (14) du racleur ayant au moins une longueur qui correspond à l'intervalle de deux trous (10) voisins.

6. Semoir de précision selon la revendication 1, caractérisé en ce que le racleur (13) présente une surface de raclage (17) qui dépasse la surface d'appui (14) en direction de l'axe de rotation de l'organe séparateur.

7. Semoir de précision selon la revendication 6, caractérisé en ce que le racleur (13) présente une surface de raclage (17) qui est en forme de gradins sur sa face tournée vers l'axe de rotation de l'organe séparateur.

8. Semoir de précision selon la revendication 1, caractérisé en ce qu'il comporte différents organes séparateurs (4) qui présentent des surfaces d'appui dépendant de la nature des produits, pour le racleur (13).

# FIG.1

FIG.2

FIG.3

13

18

17

14

17